# EUROPÄISCHE PATENTSCHRIFT

(11) **EP 0 326 920 B1**
(45) Veröffentlichungstag und Bekanntmachung des Hinweises auf die Patenterteilung: **31.03.1993**
(21) Anmeldenummer: 89101247.8
(22) Anmeldetag: 25.01.1989
(51) Int. Cl.: C03C 21/00

(54) **Vorrichtung zur Durchführung feldunterstützten Ionenaustauschs in planparallelen Platten**
Device for performing field-assisted ion-exchange in plane-parallel plates
Dispositif pour l'exécution d'échange d'ions, assisté par champ, dans des plaques à faces planes et parallèles

(30) Priorität: 01.02.1988 DE 3802837
(43) Veröffentlichungstag der Anmeldung: 09.08.1989
(73) Patentinhaber: Bodenseewerk Gerätetechnik GmbH, 88662 Überlingen (DE)
(72) Erfinder: Froning, Edilbert, Alexander, Karl, D-7777 Salem (DE); Langner, Klaus Alexander, D-7777 Überlingen (DE)
(74) Vertreter: Weisse, Jürgen, Dipl.-Phys. Patentanwalt

(56) Entgegenhaltungen:
- DE-A- 2 044 481
- DE-A- 2 313 216

## Beschreibung

### Technisches Gebiet

Die Erfindung betrifft eine Vorrichtung zur Durchführung feldunterstützten Ionenaustausches in planparallelen Platten, insbesondere zur Herstellung von optischen Wellenleitern, enthaltend:
(a) Haltekörper mit fluchtenden Hohlräumen zur Aufnahme einer Salzschmelze, zwischen denen die planparallele Platte in vertikaler Anordnung so halterbar ist, dass die gegenüberliegenden planen Oberflächen der Platte an die besagten Hohlräume angrenzen,
(b) Dichtmittel zwischen den Haltekörpern und der Platte, durch welche eine Abdichtung zwischen den Haltekörpern und den benachbarten Oberflächen der Platte längs des gesamten Umfanges der mit der Salzschmelze in Kontakt stehenden Flächenteile erfolgt, und
(c) Mittel zur Erzeugung eines durch die Schmelze und die Platte verlaufenden elektrischen Feldes.

Es ist bekannt, in planparallelen Platten optische Wellenleiter zu erzeugen, in denen Licht durch Totalreflexion geleitet wird (DE-A-28 34 344). Zu diesem Zweck müssen in der planparallelen Platte Strukturen mit einem Brechungsindex erzeugt werden, der größer als der Brechungsindex des Materials der Platte ist. Es ist bekannt, einen solchen erhöhten Brechungsindex dadurch zu erzeugen, daß in dem Material ein Ionenaustausch hervorgerufen wird, bei welchem Ionen im Material der Platte durch Ionen mit größerem Ionenradius ersetzt werden. Die Oberfläche der Platte wird mittels einer Maske abgedeckt bis auf diejenigen Bereiche, in denen der Brechungsindex erhöht werden soll. Die Platte wird auf erhöhte Temperatur erwärmt und mit geeigneten Substanzen in Kontakt gebracht. Es erfolgt dann ein Ionenaustausch und damit eine Erhöhung des Brechungsindex in den durch die Maske nicht abgedeckten Bereichen.

Die US-A-3 857 689 beschreibt die Herstellung einer integrierten optischen Schaltung, bei welcher eine Maske auf eine planparallele Platte (Substrat) aufgebracht wird, welche das gewünschte optische Muster festlegt. Die Platte wird dann in ein Bad aus einer Salzschmelze eingebracht. Diese Salzschmelze enthält einwertige positive Ionen, die einen größeren Einfluß auf den Brechungsindex haben als die positiven Ionen im Material der Platte. Es wird dafür gesorgt, daß ein Ionenaustausch stattfindet, bei welchem positive Ionen der Platte durch Ionen der Salzschmelze ersetzt werden. Das bringt eine Erhöhung des Brechungsindex in den oberflächennahen Bereichen, die von der Maske nicht abgedeckt und der Salzschmelze ausgesetzt sind.

Durch die JP-A-58-118 609 ist bekannt, den Ionenaustausch durch Anlegen eines elektrischen Feldes zu unterstützen. Bei dem dort beschriebenen Verfahren wird auf eine planparallele Platte eine Maske und dann eine dünne Silberschicht aufgedampft. Auf die Silberschicht wird eine Anode aus Chrom aufgebracht. Auf der gegenüberliegenden Seite wird eine Kathode aus Aluminium vorgesehen. Die Platte wird erwärmt, und gleichzeitig wird zwischen Anode und Kathode eine Spannung angelegt. Durch das elektrische Feld werden Silberionen in das Material der Platte transportiert. Dadurch wird in den durch die Maske nicht abgedeckten Bereichen ein optischer Wellenleiter mit gegenüber der Platte erhöhtem Brechungsindex erzeugt.

Es ist weiterhin bekannt, eine planparallele Platte, die mit Wellenleitern versehen werden soll in waagerechter Lage durch eine mit einem Unterdruck verbundene Saugglocke zu halten. In der Saugglocke ist ein Vorrat von Salzschmelze enthalten. Die der Saugglocke abgewandte Seite der planparallelen Platte ist mit einer Maske versehen. Diese Seite der Platte wird in einen weiteren Vorrat der Salzschmelze eingetaucht. Über Elektroden wird an die Salzschmelzen ein elektrisches Feld angelegt. Auch hier diffundieren positive Ionen größeren Durchmessers aus dem unteren Vorrat von Salzschmelze in die Platte hinein und erzeugen dadurch in den nicht-abgedeckten Bereichen optische Wellenleiter mit erhöhtem Brechungsindex, während andererseits auf der oberen Seite der Platte Ionen geringeren Durchmessers aus dem Material der Platte in die Salzschmelze austreten. Es ist auch bekannt, statt der Saugglocke einen Ring vorzusehen, mit dessen unterer Stirnfläche eine Glasplatte mit einer zu behandelnden Oberfläche angeklebt ist (DE-A-20 44 481, Fig.1).

In der Praxis zeigt sich, daß eine dichte Anlage der Platte an der Dichtfläche der Saugglocke bei nicht kreisrunden Platten nicht zu erreichen ist, da sich die Platten unter dem Einfluß des Unterdrucks tütenartig verformen. Die Handhabung dieser bekannten Vorrichtungen ist zudem umständlich.

Es ist weiterhin bekannt, eine planparallele Platte vertikal zu haltern. Auf beiden Seiten der Platte sind mit entsprechenden Dichtflächen Schalen angesetzt, so daß beiderseits der Platte Hohlräume gebildet werden, die auf einer vertikalen Seitenfläche jeweils durch eine Oberfläche der Platte begrenzt und nach oben hin offen sind. In diese Hohlräume ist Salzschmelze eingefüllt. Die Schalen tragen eine Anode bzw. eine Kathode, so daß durch die Salzschmelze und die Platte hindurch ein elektrisches Feld erzeugt wird. Anodenseitig trägt die Platte wieder eine Maske (US-A-3 627 491).

Bei dieser bekannten Anordnung besteht die Gefahr, daß die Salzschmelze durch Adhäsionskräfte über die oben aus der Salzschmelze herausragende Kante der Platte kriecht und einen Kurzschluß verursacht.

Durch die DE-A-20 44 481 ist ein Verfahren zur Oberflächenbehandlung von planparallelen Platten aus Glas durch Ionenaustausch bekannt. Bei diesem bekannten Verfahren ist die planparralele Platte zwischen zwei Haltekörper in vertikaler Anordnung gehaltert. Die beiden Haltekörper sind mit fluchtenden Hohlräumen zur Aufnahme einer Salzschmelze versehen. Die planen Oberflächen der Platte grenzen dabei an die besagten Hohlräume an. Zwischen den Haltekörpern und der Platte sind Dichtmittel vorgesehen, durch welche eine Abdichtung zwischen den Haltekörpern und den benachbarten Oberflächen der Platte längs des gesamten Umfanges der mit der Salzschmelze in Kontakt stehenden Flächenteile erfolgt. In die Salzschmelze tauchen eine Anode und eine Kathode, zwischen welche eine Spannung zur Erzeugung eines durch die Schmelze und durch die Platte verlaufenden elektrischen Feldes anlegbar ist.

Bei der DE-A-2 044 481 sind die Haltekörper von im Vertikalschnitt L-förmigen Hohlkörpern gebildet. Die einander zugekehrten Stirnflächen der Hohlkörper sind an die Form der zu behandelnden Platte angepasst. Die Platte ist längs ihres Umfanges mit diesen Stirnflächen verklebt. In den so beiderseits der Platte gebildeten Hohlräumen befindet sich eine Salzschmelze.

### Offenbarung der Erfindung

Der Erfindung liegt die Aufgabe zugrunde, eine Vorrichtung der eingangs genannten Art zu schaffen, die einfach zu handhaben ist und bei der das Absetzen und Ansammeln von Luftblasen an der planparallelen Platte verhindert wird.

Erfindungsgemäss wird diese Aufgabe dadurch gelöst, dass
(d) die Dichtmittel an den Haltekörpern von umlaufenden Dichtflächen gebildet sind, die unmittelbar an die gegenüberliegenden planen Oberflächen der Platte abdichtend anlegbar sind,
(e) die von den Haltekörpern vorstehenden Dichtflächen in einander zugewandten, vertikalen Seitenflächen der beiden Haltekörper Hohlräume bestimmen, die über Füllzuleitungen mit in den Haltekörpern ausgebildeten Vorratsbehältern für die Salzschmelze verbunden sind,
(f) jeder Hohlraum über die am unteren Ende des Kohlraums mündende Füllzuleitung mit dem nach oben hin offenen Vorratsbehälter für die Salzschmelze verbunden ist und eine vom oberen Ende des Hohlraums ausgehende Entlüftungsleitung aufweist, die im oberen Teil des Vorratsbehälters oberhalb der Salzschmelze mündet, und
(g) ein Spannbügel vorgesehen ist, der an den von den Dichtflächen abgekehrten Seiten der Haltekörper angreift und mittels dessen die Haltekörper mit ihren Dichtflächen lösbar und abdichtend unmittelbar an die gegenüberliegenden planen Oberflächen der Platte zu deren Halterung während des feldunterstützten Ionenaustausches anlegbar sind.

Auf diese Weise ist die planparallele Platte sicher zwischen den fluchtenden Dichtflächen der beiden Haltekörper gehalten. Die Dichtflächen können an die Form der Platte angepasst werden. Es können daher durch geeignete Ausbildung der Haltekörper beliebige Platten bearbeitet werden. Da die Dichtflächen ringsherum um die Hohlräume verlaufen, kann keine Salzschmelze an der Oberfläche der Platte entlangkriechen und, wie bei der vorerwähnten bekannten Vorrichtung, eine elektrisch leitende Verbindung zwischen den Salzschmelzen auf beiden Seiten der Platte herstellen. Die Anordnung der Vorratsbehälter und Entlüftungsleitungen gewährleistet, dass bei gefüllten Vorratsbehältern auch die Hohlräume stets mit Salzschmelze gefüllt sind. Durch die vertikale Anordnung der Platte ist sichergestellt, dass sich nicht Blasen an der Platte festsetzen können wie bei einer horizontalen Anordnung der Platte. Solche Blasen in der Salzschmelze können den Ionenaustausch lokal beeinträchtigen.

Vorteilhaft ist es, wenn die Haltekörper aus einem elektrisch leitenden Material bestehen und isoliert an dem Spannbügel gehaltert sind und wenn die Mittel zur Erzeugung des elektrischen Feldes an den Haltekörpern angeordnete Anschlussklemmen zum Anschluss an eine Spannungsquelle enthalten.

Ein Ausführungsbeispiel der Erfindung mit einer Abwandlung ist nachstehend unter Bezugnahme auf die zugehörigen Zeichnungen näher erläutert.
- Fig.1: zeigt schematisch einen Längsschnitt durch eine Vorrichtung zur Durchführung eines Ionenaustauschs in einer planparallelen Platte.
- Fig.2: zeigt eine Seitenansicht eines Haltekörpers bei der Vorrichtung von Fig.1, bei welchem die Füllzuleitung durch einen Stöpsel bis zum Erreichen der Austauschtemperatur verschliessbar ist.
- Fig.3: zeigt eine Ansicht eines Haltekörpers bei der Vorrichtung von Fig.1 von der Seite der zu bearbeitenden Platte her oder von links in Fig.2 gesehen.
- Fig.4: zeigt eine Draufsicht des Haltekörpers von Fig.2 und 3.
- Fig.5: zeigt eine Ansicht, ähnlich Fig.3, eines Haltekörpers zur Verwendung bei kreisrunden Platten.
- Fig. 6: ist eine Draufsicht des Haltekörpers von Fig.5.

Die Vorrichtung enthält zwei im wesentlichen übereinstimmende Haltekörper 10 und 12. Die Haltekörper 10 und 12 sind im wesentlichen quaderförmig. An ihren oberen Stirnflächen 14 und 16 bilden die beiden Haltekörper 10 bzw. 12 jeweils einen Vorratsbehälter 18 bzw. 20. für eine Salzschmelze. Die Vorratsbehälter 18 und 20 sind nach oben hin offen.

In den einander zugekehrten Seitenflächen 22 und 24 der Haltekörper 10 bzw. 12 sind Vertiefungen vorgesehen, welche Hohlräume 26 bzw. 28 bilden. Ringsherum um die Hohlräume 26 und 28 sind Dichtflächen 30 bzw. 32 gebildet. Die Dichtflächen 30 und 32 sind sehr genau plan bearbeitet. Die Dichtflächen 30 und 32 stehen etwas gegenüber den Seitenflächen 22 bzw. 24 vor.

Der Hohlraum 26 ist durch eine Füllzuleitung 34 mit dem Vorratsbehälter 18 verbunden. Die Füllzuleitung 34 geht vom Grund des Vorratsbehälters 18 aus und mündet am unteren Ende des Hohlraumes 26. Vom oberen Ende des Hohlraumes 26 geht eine Entlüftungsleitung 36 aus. Die Entlüftungsleitung 36 ist längs der Wandung des Vorratsbehälters 18 geführt und mündet im oberen Teil des Vorratsbehälters dicht unterhalb von dessen Oberkante, also der oberen Stirnfläche 14.

In entsprechender Weise ist der Hohlraum 28 durch eine Füllzuleitung 38 mit dem Vorratsbehälter 20 verbunden. Die Füllzuleitung 38 geht vom Grund des Vorratsbehälters 18 aus und mündet am unteren Ende des Hohlraumes 28. Vom oberen Ende des Hohlraumes 28 geht eine Entlüftungsleitung 40 aus. Die Entlüftungsleitung 40 ist längs der Wandung des Vorratsbehälters 20 geführt und mündet im oberen Teil des Vorratsbehälters 20 dicht unterhalb von dessen Oberkante, also der oberen Stirnfläche 16.

Der Boden der Vorratsbehälter 18 und 20 liegt oberhalb des oberen Endes der Hohlräume 26 bzw. 28. Auf diese Weise ist sichergestellt, daß die Hohlräume 26 und 28 bis oben hin mit Salzschmelze gefüllt sind, sofern sich noch Salzschmelze in dem Vorratsbehälter 18 bzw. 20 befindet.

Zwischen den beiden Haltekörpern 10 und 12 ist eine planparallele Platte 42 gehalten. Die Platte 42 trägt auf ihrer dem Haltekörper 12 zugewandten, in der Figur rechten Seite eine Maske 44 aus einem Material, welches den Ionenaustausch in den von der Maske 44 abgedeckten Bereichen verhindert. Die Dichtflächen 30 und 32 liegen dicht an den Oberflächen der Platte 42 an.

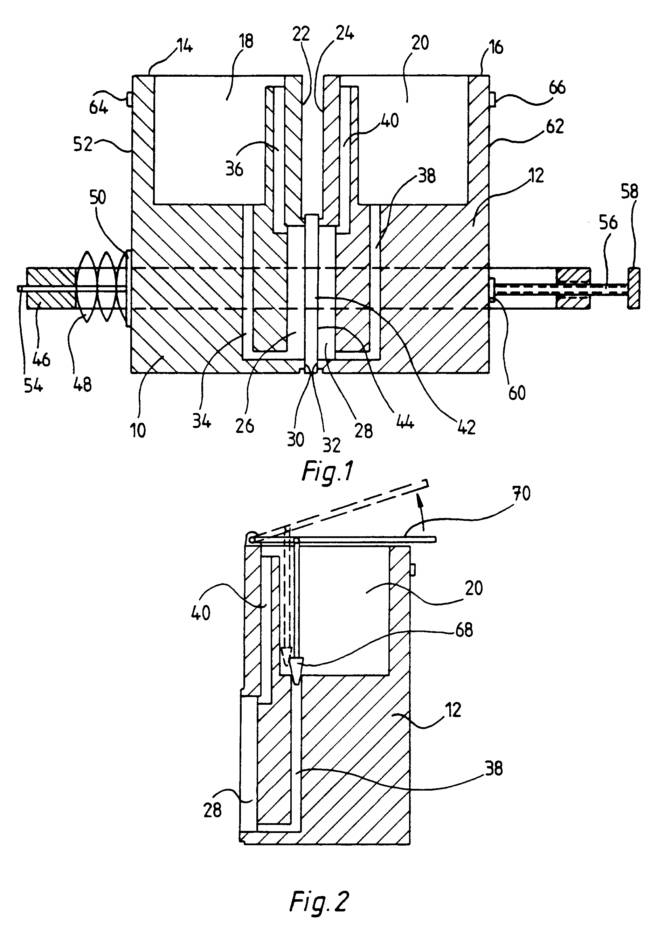

Die beiden Haltekörper sind aus einem elektrisch leitenden Material, nämlich aus Metall. Sie werden bei dem dargestellten Ausführungsbeispiel durch einen Klammerbügel 46 zusammengehalten. Auf der in Fig.1 linken Seite stützt sich an dem Klammerbügel 46 ein Satz von Tellerfedern 48 ab, die über eine Isolierung 50 an der der Seitenfläche 22 gegenüberliegenden Seitenfläche 52 des Haltekörpers 10 anliegen. Ein Zentrierstift 54 an der Isolierung 50 sorgt für die Zentrierung von Isolierung 50, Tellerfedern 48 und Klammerbügel 46.

Auf der entgegengesetzten Seite ist in dem Klammerbügel 46 eine Gewindespindel 56 geführt, die mittels eines Stellknopfes 58 verstellbar ist. Diese Gewindespindel 56 liegt über ein Isolierstück 60 an der der Seitenfläche 24 gegenüberliegenden Seitenfläche 62 des Haltekörpers 12 an. Auf diese Weise werden die beiden Haltekörper 10 und 12 mit definierter Kraft gegen die Platte 42 gedrückt. Die Gewindespindel 56 gestattet eine Einstellung dieser Andruckkraft. Die Tellerfedern 48 verhindern, daß die Andruckkraft zu groß werden und zu einer Beschädigung der Platte 42 führen kann.

Der Haltekörper 10 ist mit der negativen Klemme 64 einer Spannungsquelle verbunden und stellt daher eine Kathode dar. Der Haltekörper 12 ist mit der positiven Klemme 66 der Spannungsquelle verbunden und bildet die Anode.

Die Beschriebene Vorrichtung arbeitet wie folgt:
Die Platte 42 wird zwischen den beiden Haltekörpern 10 und 12 eingespannt. Die Dichtflächen 30 und 32 der Haltekörper 10 bzw. 12 liegen auf gegenüberliegenden Seiten an den Oberflächen der Platte 42 längs der Ränder der Platte an. Dabei fluchten die Dichtflächen 30 und 32 miteinander, so daß keine Biegemomente an der Platte 42 wirksam werden. Die Platte kann sich daher nicht wie bei bekannten Vorrichtungen "tütenartig" verformen. Die Dichtflächen können daher mit ausreichender Kraft durch die Gewindespindel 56 und die Federn 48 an die Oberflächen der Platte 42 angedrückt werden, so daß eine sichere Abdichtung rings um die Platte herum erreicht wird.

Die Vorratsbehälter 18 und 20 werden mit einer Salzschmelze gefüllt, welche die positiven Ionen enthält, die gegen andere Ionen in dem Material der Platte 42 ausgetauscht werden sollen. Diese Salzschmelze fließt durch die Füllzuleitungen 34 und 38 in die Hohlräume 26 bzw. 28. Die Luft aus den Hohlräumen 26 und 28 strömt über die Entlüftungsleitungen 36 bzw. 40 ab. Es ist daher eine einwandfreie Füllung der Hohlräume mit der Salzschmelze ohne Blasenbildung gewährleistet. Die Hohlräume 26 und 28 sind dicht abgeschlossen. Es kann daher keine Salzschmelze an der Oberfläche der Platte entlangkriechen und eine leitende Verbindung zwischen den beiden Seiten der Platte 42 herstellen, wie das bei einer andere bekannten Anordnung der Fall ist.

Zwischen die Haltekörper 10 und 12 wird eine Spannung angelegt, so daß positive Ionen aus der Salzschmelze im Vorratsbehälter 20 unter dem Einfluß des elektrischen Feldes in den von der Maske 44 freigelassenen Bereichen durch die ebenfalls erwärmte Platte 42 wandern und Ionen mit geringerem Ionendurchmesser verdrängen, die dann in die Salzschmelze im Hohlraum 26 gelangen. Es entstehen dann in den von der Maske 44 freigelassenen Bereichen Strukturen, insbesondere Wellenleiter, mit gegenüber dem Material der Platte 42 erhöhtem Brechungsindex.

Um definierte Zeitabläufe für den feldunterstützten Ionenaustausch zu erhalten, ist es wünschenswert, die Schmelze nicht schon während der Hochlaufphase des Ofens in Kontakt mit dem Glassubstrat, der Platte 42, zu bringen. Die Hochlaufphase ist dabei die Zeit vom Erreichen der Schmelztemperatur der Schmelze bis zum Erreichen der eigentlichen Austauschtemperatur. Aus diesem Grund ist, wie in Fig.2 angedeutet ist, die Füllzuleitung 38 durch eie Art Stöpsel 68 zunächst abgeschlossen. Der Stöpsel 68 kann durch einen Mechanismus 70 herausgezogen werden, wie in Fig.2 schematisch angedeutet ist. Der Stöpsel ist ein einfacher Kegel aus dem gleichen Material wie die übrige Apparatur selbst. Der Stöpsel wird zum Dichten leicht eingepreßt.

Der Stöpsel 68 wird herausgezogen, wenn die Austauschtemperatur erreicht ist und unmittelbar bevor das Feld angelegt wird.

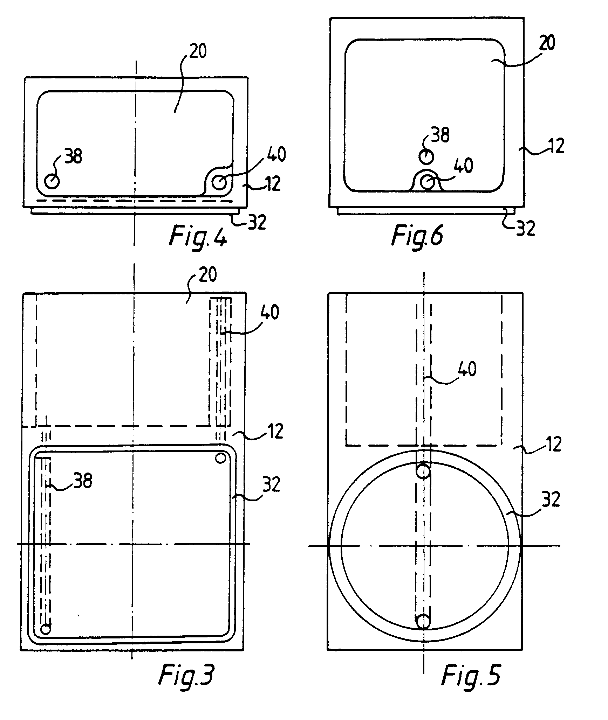

Fig 5 und 6 zeigen eine abgewandelte Ausführung der Haltekörper. Entsprechende Teile sind in Fig.5 und 6 mit den gleichen Bezugszeichen versehen wie in Fig.1. Bei dem Haltekörper 10 von Fig.5 und 6 ist die Dichtfläche 30 nicht rechteckig wie bei Fig.3 sondern kreisrund. Außerdem liegen die Füllzuleitung 34 und die Entlüftungsleitung 36 beide in der Längsmittelebene des Haltekörpers 10.

## Patentansprüche

1. Vorrichtung zur Durchführung feldunterstützten Ionenaustausches in planparallelen Platten, insbesondere zur Herstellung von optischen Wellenleitern, enthaltend:
(a) Haltekörper (10,12) mit fluchtenden Hohlräumen (26,28) zur Aufnahme einer Salzschmelze, zwischen denen die planparallele Platte (42) in vertikaler Anordnung so halterbar ist, dass die gegenüberliegenden planen Oberflächen der Platte (42) an die besagten Hohlräume (26,28) angrenzen,
(b) Dichtmittel zwischen den Haltekörpern (10,12) und der Platte (42), durch welche eine Abdichtung zwischen den Haltekörpern (10,12) und den benachbarten Oberflächen der Platte (42) längs des gesamten Umfanges der mit der Salzschmelze in Kontakt stehenden Flächenteile erfolgt, und
(c) Mittel zur Erzeugung eines durch die Schmelze und die Platte (42) verlaufenden elektrischen Feldes,
**dadurch gekennzeichnet, dass**
(d) die Dichtmittel von an den Haltekörpern (10,12) umlaufenden Dichtflächen (30,32) gebildet sind, die unmittelbar an die gegenüberliegenden planen Oberflächen der Platte (42) abdichtend anlegbar sind,
(e) die von den Haltekörpern (10,12) vorstehenden Dichtflächen (30,32) in einander zugewandten, vertikalen Seitenflächen der beiden Haltekörper (10,12) Hohlräume (26,28) bestimmen, die über Füllzuleitungen (34,38) mit in den Haltekörpern (10,12)ausgebildeten Vorratsbehältern (18,20) für die Salzschmelze verbunden sind,
(f) jeder Hohlraum (26;28) über die am unteren Ende des Hohlraums mündende Füllzuleitung (34;38) mit dem nach oben hin offenen Vorratsbehälter (18;20) für die Salzschmelze verbunden ist und eine vom oberen Ende des Hohlraums (26;28) ausgehende Entlüftungsleitung (36;40) aufweist, die im oberen Teil des Vorratsbehälters (18;20) oberhalb der Salzschmelze mündet, und
(g) ein Spannbügel (46) vorgesehen ist, der an den von den Dichtflächen (30,32) abgekehrten Seiten der Haltekörper (10,12) angreift und mittels dessen die Haltekörper (10,12) mit ihren Dichtflächen (30,32) lösbar und abdichtend unmittelbar an die gegenüberliegenden planen Oberflächen der Platte (42) zu deren Halterung während des feldunterstützten Ionenaustausches anlegbar sind.

2. Vorrichtung nach Anspruch 1, **dadurch gekennzeichnet, dass** die Haltekörper (10,12) aus einem elektrisch leitenden Material bestehen und isoliert an dem Spannbügel (46) gehaltert sind und dass die Mittel zur Erzeugung des elektrischen Feldes an den Haltekörpern (10,12) angeordnete Anschlussklemmen (64 bzw. 66) zum Anschluss an eine Spannungsquelle enthalten.

3. Vorrichtung nach Anspruch 1 oder 2**, dadurch gekennzeichnet, daß** der Boden der Vorratsbehälter (18,20) oberhalb des oberen Endes der Hohlräume (26,28) liegt.

4. Vorrichtung nach einem der Ansprüche 1 bis 3, **dadurch gekennzeichnet, daß** die Füllzuleitungen (34,38) durch je einen herausziehbaren Stöpsel (68) verschließbar sind.

## Claims

1. Apparatus for carrying out field-supported ion exchange in plane-parallel plates, particularly for producing optical waveguides, containing:
(a) retaining bodies (10,12) including aligned cavities (26,28) for receiving a salt melting, said retaining bodies being arranged for retaining therebetween the plane-parallel plate (42) in vertical arrangement such that the mutually oppositely disposed planar surfaces of the plate (42) adjoin respective ones of said cavities (26,28),
(b) sealing means provided between the retaining bodies (10,12) and the plate (42) for effecting sealing between the retaining bodies (10,12) and the respective adjacent surfaces of the plate (42) along the entire circumference of the surface portions which are in contact with the salt melting, and
(c) means for generating an electrical field extending through the melting and the plate (42),
**characterised in that**
(d) the sealing means are formed by sealing surfaces (30,32) which extend along the circumference of the retaining bodies (10,12) and which are immediately sealingly engageable with the opposite planar surfaces of the plate (42),
(e) the sealing surfaces (30,32) which protrude from the retaining bodies (30,32), define cavities (26,28) in mutually facing vertical side faces of the two retaining bodies (10,12), said cavities being in communication with reservoirs (18,20) which are formed in the retaining bodies (10,12) for receiving the salt melting, through filling conduits (34,38),
(f) each one of said cavities (26;28) is connected to the respective salt melting reservoir (18;20) which is open at the top, through the respective filling conduit (34;38) which opens at the bottom end of the cavity, and each one of said cavities comprises a venting conduit (36;40) which extends from the top end of the cavity (18;20) and opens into a top portion of the reservoir (18;20) above the salt melting, and
(g) a clamping bracket (46) is provided which engages the retaining bodies (10,12) on the side remote from the sealing surfaces (30,32) and by means of which the retaining bodies (10,12) are adapted to immediately, releasably and sealingly engage through their sealing surfaces (30,32) the oppositely disposed planar surfaces of the plate (42) for retaining the same during the field-supported ion exchange.

2. Apparatus according to claim 1, **characterised in that** the retaining bodies (10,12) are made of an electrically conductive material and are insulatingly retained at the clamping bracket (46) and that the means for generating the electrical field include connecting terminals (64,66) disposed at the respective retaining bodies (10,12) for connection to a voltage source.

3. Apparatus according to claim 1 or 2, **characterised in that** the bottom of the reservoirs (18,20) is disposed above the top end of the respective cavities (26,28).

4. Apparatus according to any one of claims 1 to 3, **characterised in that** the filling conduits (34,38) are closeable by respective removable plugs (68).

## Revendications

1. Dispositif destiné à effectuer un échange d'ions soutenu par champ dans des plaques à faces planes et parallèles, en particulier pour la fabrication de guides d'ondes optiques, comprenant:
(a) des corps de support (10,12) présentant des cavités alignées (26,28) destinées à recevoir une fonte de sel, corps de support entre lesquels la plaque à faces planes et parallèles (42) peut être tenue en disposition verticale de sorte que les surfaces planes opposées de la plaque (42) sont contigues auxdites cavités (26,28),
(b) des moyens d'étanchéité entre les corps de support (10,12) et la plaque (42), qui effectuent un étanchement entre les corps de support (10,12) et les surfaces adjacentes de la plaque (42) le long de toute la circonférence des parties de surface en contact avec la fonte de sel, et
(c) des moyens destinés à engendrer un champ électrique passant par la fonte et la plaque (42),
**caractérisé par le fait que**
(d) les moyens d'étanchéité sont formés par des surfaces d'étanchéité (30,32) circulant aux corps de support (10,12) et qui peuvent être directement appliquées contre les surfaces planes opposées de la plaque (42) de sorte qu'elles soient étanchées,
(e) les surface d'étanchéité (30,32) saillant des corps de support (30,32) déterminent dans des surfaces latérales verticales opposées des deux corps de support (10,12), des cavités (26,28) reliées par des conduites d'alimentation de remplissage (34,38) à des réservoirs (18,20) pour la fonte de sel qui sont formés dans les corps de support (10,12),
(f) chaque cavité (26;28) est reliée par la conduite d'alimentation de remplissage (34;38) débouchant dans l'extrémité inférieure de la cavité, au réservoir (18;20) pour la fonte de sel ouvert vers le haut, et présente une conduite d'aération (36;40) partant de l'extrémité supérieure de la cavité (18;20) et débouchant dans la partie supérieure du réservoir (18;20) au dessus de la fonte de sel, et
(g) on a prévu un étrier de tension (46) appliqué contre les côtés des corps de support (10,12) détournés des surfaces d'étanchéité (30,32) et au moyen duquel les surfaces d'étanchéité (30,32) des corps de support (10,12) peuvent être appliqués directement contre les surfaces planes opposées de la plaque (42) de sorte qu'ils soient étanchés et qu'ils peuvent être détaché afin de fixer la plaque lors de l'échange d'ions soutenu par champ.

2. Dispositif selon la revendication 1, **caractérisé par le fait que** les corps de support (10,12) sont constitués d'une matière électriquement conductive et fixés de manière isolée à l'étrier de tension (46), et que les moyens destinés à engendrer le champ magnétique comprennent des bornes de connexion (64 resp. 66) disposées aux corps de support afin de les raccorder à une source de tension.

3. Dispositif selon la revendication 1 ou 2, **caractérisé par le fait que** le fond des récipients (18,20) est situé au dessus de l'extrémité supérieure des cavités (26,28).

4. Dispositif selon l'une des revendications 1 à 3, **caractérisé par le fait que** les conduites d'alimentation de remplissage (34,38) peuvent être fermées chacune par un bouchon rétirable (68).
